# EUROPEAN PATENT APPLICATION

(11) **EP 2 926 901 A1**
(43) Date of publication of application: **07.10.2015**
(21) Application number: 15162244.6
(22) Date of filing: 01.04.2015
(51) Int. Cl.: B01J 23/50, B01D 53/94, B01J 35/00, B01J 35/10, B01J 37/02, F01N 3/02

(54) **EXHAUST GAS PURIFICATION CATALYST, AND EXHAUST GAS PURIFICATION FILTER AND EXHAUST GAS PURIFICATION METHOD USING THE SAME**

(30) Priority: 02.04.2014 JP 2014075965
(71) Applicant: Toyota Jidosha Kabushiki Kaisha, Toyota-shi, Aichi-ken 471-8571 (JP)
(72) Inventor: Kikugawa, Masashi, Aichi-ken, 480-1192 (JP); Yamazaki, Kiyoshi, Aichi-ken, 480-1192 (JP); Sobue, Yuichi, Aichi-ken, 471-8571 (JP); Okawara, Seiji, Aichi-ken, 471-8571 (JP)
(74) Representative: Kuhnen & Wacker

(57) **Abstract**

An exhaust gas purification catalyst includes: a support containing alumina as a major component; and an active species fine particle containing silver sulfate as a major component and having an average crystallite size of 3 nm to less than 100 nm, in which the active species fine particle is supported on a surface of the support.

## Description

### BACKGROUND OF THE INVENTION

### 1. Field of the Invention

The present invention relates to an exhaust gas purification catalyst, and an exhaust gas purification filter and an exhaust gas purification method using the same.

### 2. Description of Related Art

Gas exhausted from an internal combustion engine contains harmful materials, for example, particulate matter (PM) produced by combustion and ash including additives in oil. Among the harmful materials, particulate matter is known as an air pollutant having an adverse effect on animals and plants. Therefore, a purification filter (Diesel Particulate Filter; DPF) is used in order to collect particulate matter which is contained in exhaust gas exhausted from an internal combustion engine. Since the PM collected in the DPF causes an increase in pressure loss, the temperature of the DPF is periodically increased to a high temperature to burn the PM, thereby regenerating the DPF. At this time, in order to improve fuel efficiency and durability of a material, it is preferable that the DPF is regenerated at a low temperature, and a PM oxidation catalyst is supported in the DPF.

As such a PM oxidation catalyst, Japanese Patent Application Publication No. 2009-45584 (JP 2009-45584 A) discloses an exhaust gas purification catalyst for purifying particulate matter in exhaust gas exhausted from an internal combustion engine, and an exhaust gas control apparatus using the same. This exhaust gas purification catalyst includes: a composite oxide (for example, LaMnO₃, CeZrO₂, or CoTa₂O₆) having an oxygen releasing capability; and Ag and a noble metal (for example, Ru, Pd, or Pt) co-supported on the composite oxide, in which the composite oxide includes at least two elements selected from the group consisting of an alkali earth metal element, a transition metal element, a Group 12 element, and a Group 13 element. However, the exhaust gas purification catalyst disclosed in JP 2009-45584 A has a problem in that the activity of the Ag catalyst is significantly decreased due to poisoning by a sulfur component contained in fuel or oil. In particular, in a catalyst using a highly basic support such as ceria, the activity is extremely high in the initial stage, but a decrease in the activity due to the sulfur component is significant. Therefore, when this highly basic support is exposed to gas containing sulfur, the PM oxidation activity thereof is not sufficient.

In addition, Japanese Patent Application Publication No. 2011-218295 (JP 2011-218295 A) discloses an exhaust gas purification filter that is provided in an exhaust gas flow path of an internal combustion engine and collects particulate matter in exhaust gas, exhausted from the internal combustion engine, to purify the exhaust gas. This exhaust gas purification filter includes a honeycomb structure including: an outer peripheral wall; a porous cell wall that is provided in the outer peripheral wall in a polygonal lattice shape; and plural cells that are partitioned in the cell wall. Among the cells, an downstream end of an intake side cell and an upstream end of an exhaust side cell are blocked by a stopper, the inflow gas-side cell functions as an intake side flow path through which exhaust gas is taken in, and the exhaust side cell functions as an exhaust side flow path through which the exhaust gas having passed through the cell wall is exhausted. On the cell wall, a PM combustion catalyst containing Ag and an oxidation catalyst are supported, the PM combustion catalyst is formed of a catalyst material obtained by dispersing Ag in a layered alumina, and the oxidation catalyst oxidizes at least CO in the exhaust gas. On a wall surface of the intake side cell, the PM combustion catalyst is supported without the oxidation catalyst being supported. On a wall surface of the exhaust side cell, at least the oxidation catalyst is supported. However, in the exhaust gas purification filter disclosed in JP 2011-218295 A, the dispersibility of the Ag catalyst supported on alumina is low, and an Ag particle is coarse. Therefore, the contact probability between the Ag particle and PM is low. Therefore, when the Ag catalyst is converted into silver sulfate due to sulfur poisoning, the activity thereof is decreased. Accordingly, when the Ag catalyst is exposed to gas containing sulfur, the PM oxidation activity thereof is not sufficient.

Further, Japanese Patent Application Publication No. 2012-219715 (JP 2012-219715 A) discloses an exhaust gas control apparatus including an oxidation catalyst. This oxidation catalyst includes a support and a silver-containing material supported on the support. The support is formed of at least one metal salt selected from the group consisting of sulfate and phosphate of Ca. The silver-containing material is at least one selected from the group consisting of silver, silver oxide, silver carbonate, silver sulfate, and silver phosphate. According to the description of the above patent document, an exhaust gas control apparatus can be provided, in which a decrease in particulate matter oxidation performance due to ash deposition is sufficiently suppressed, and the particulate matter oxidation performance is also superior after ash deposition. However, recently, the requirements in an exhaust gas purification catalyst have increased, and an exhaust gas purification catalyst capable of exhibiting sufficiently high PM oxidation activity even when being exposed to gas containing sulfur has been required.

### SUMMARY OF THE INVENTION

The invention provides an exhaust gas purification catalyst capable of exhibiting sufficiently high PM oxidation activity even when being exposed to gas containing sulfur, and an exhaust gas purification filter and an exhaust gas purification method using the same.

As a result of intensive investigation for achieving the above-described object, the present inventors have found that, by causing an active species fine particle containing silver sulfate as a major component to be supported on a surface of a support containing alumina as a major component, surprisingly, the obtained exhaust gas purification catalyst can exhibit sufficiently high PM oxidation activity even when being exposed to gas containing sulfur. Based on this finding, the invention has been completed.

That is, according to a first aspect of the invention, an exhaust gas purification catalyst is provided. The exhaust gas purification catalyst includes: a support containing alumina as a major component; and an active species fine particle containing silver sulfate as a major component and having an average crystallite size of 3 nm to less than 100 nm, in which the active species fine particle is supported on a surface of the support.

In the aspect, a support amount of the silver sulfate with respect to a total amount of the support and the active species fine particle may be 2 mass% to 50 mass% in terms of metal silver.

In addition, in the aspect, a specific surface area of the support may be 5 m²/g to 300 m²/g.

According to a second aspect of the invention, an exhaust gas purification filter is provided. The exhaust gas purification filter includes: an air-permeable substrate; and an exhaust gas purification catalyst according to the above aspect of the invention supported on the air-permeable substrate.

In addition, according to a third aspect of the invention, an exhaust gas purification method is provided. The exhaust gas purification method includes oxidizing and removing particulate matter (PM) by bringing exhaust gas exhausted from an internal combustion engine into contact with the exhaust gas purification catalyst according to the above aspect of the invention.

By using the exhaust gas purification catalyst, and the exhaust gas purification filter and the exhaust gas purification method using the same according to the aspects of the invention, sufficiently high PM oxidation activity can be exhibited even when being exposed to gas containing sulfur. The reason is not clear, but the present inventors presume the reason to be as follows.

That is, in the invention, silver sulfate which is used while being supported on the surface of the support containing alumina as a major component is less likely to be affected by sulfur poisoning as compared to metal silver or silver oxide. In addition, since silver sulfate used as the active species fine particle has higher dispersibility on alumina used as the support as compared to metal silver or silver oxide, the contact probability thereof with particulate matter (PM) is improved, and thus sufficiently high PM oxidation activity is exhibited. In addition, silver sulfate as an active species is stable on the surface of the support containing alumina as a major component even at a high temperature and is not likely to be decomposed. Therefore, even when silver sulfate is exposed to gas containing sulfur, high PM oxidation activity can be maintained. As a result, the present inventors presume that, even when the exhaust gas purification catalyst is exposed to gas containing sulfur, sufficiently high PM oxidation activity can be maintained.

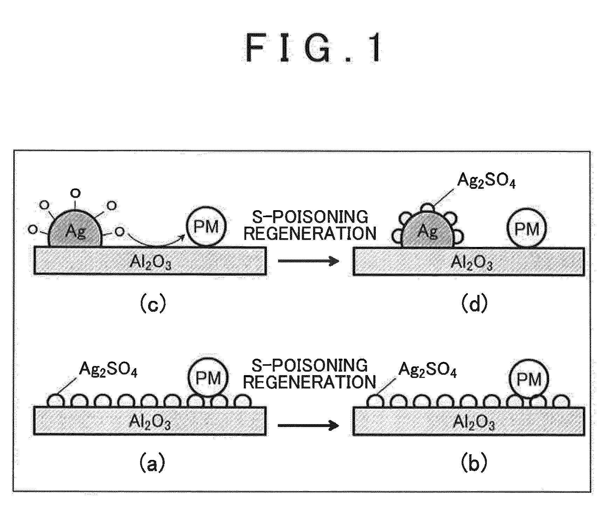

Hereinafter, an initial state of an exhaust gas purification catalyst and a state thereof during sulfur poisoning regeneration will be described with reference to FIGS. 1(a) to 1(d) which are schematic diagrams showing initial states of exhaust gas purification catalysts and states thereof during sulfur poisoning regeneration. First, in an initial state of an exhaust gas purification catalyst of the related art in which a silver (Ag) particle is supported on alumina (Al₂O₃), as shown in FIG. 1(c), the silver (Ag) particle is supported on a portion of a surface of alumina (Al₂O₃) which is a support. An oxygen active species is adsorbed on a surface of the silver (Ag) particle, this oxygen active species is transferred to particulate matter (PM) through the alumina support, and this oxygen active species can oxidize the PM. When the exhaust gas purification catalyst of the related art is exposed to gas containing sulfur, as shown in FIG. 1(d), a portion of the silver particle supported on the surface of the alumina support may be converted into silver sulfate due to sulfur poisoning. The oxygen active species cannot be adsorbed on the surface of the sulfur-poisoned Ag particle. In addition, since the Ag particle is coarse, the contact probability of silver sulfate, which is produced on a portion of the surface of Ag supported on the surface of the alumina support, with the PM is low. Therefore, it is presumed that the activity is decreased. In this way, in the exhaust gas purification catalyst of the related art in which the silver particle is supported on the surface of the alumina support, when being exposed to gas containing sulfur, a portion of the Ag particle supported on the alumina support may be converted into sulfur-poisoned silver sulfate, and this silver sulfate does not contribute to PM oxidation.

On the other hand, in the exhaust gas purification catalyst according to the invention, the active species fine particle containing silver sulfate as a major component and having an average crystallite size of 3 nm to less than 100 nm is supported on the surface of the support containing alumina as a major component. In an initial state of the exhaust gas purification catalyst according to the invention, as shown in FIG. 1(a), oxygen of a silver sulfate fine particle which is the active species fine particle supported on the surface of the support such as alumina can be used to oxidize particulate matter (PM) near the silver sulfate fine particle. Oxygen of the silver sulfate fine particle is used for the oxidation when particulate matter (PM) approaches the silver sulfate fine particle. As shown in FIG. 1(b), the average crystallite size of the active species fine particle containing silver sulfate as a major component is sufficiently small at 3 nm to less than 100 nm. Therefore, the present inventors presume that, when the exhaust gas purification catalyst according to the invention is exposed to gas containing sulfur, the contact probability with particulate matter (PM) is sufficiently maintained even after sulfur poisoning regeneration, and high PM oxidation activity can be maintained.

The present inventors presume that, in the exhaust gas purification catalyst according to the invention in which the active species fine particle containing silver sulfate as a major component and having an average crystallite size of 3 nm to less than 100 nm is supported on the surface of the support containing alumina as a major component, due to the above-described actions, sufficiently high PM oxidation activity is exhibited even when being exposed to gas containing sulfur.

According to the aspects of the invention, an exhaust gas purification catalyst capable of exhibiting sufficiently high PM oxidation activity even when being exposed to gas containing sulfur; and an exhaust gas purification filter and an exhaust gas purification method using the same can be provided.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1(a) to 1(d) are schematic diagrams showing initial states of exhaust gas purification catalysts and states thereof during sulfur poisoning regeneration, in which FIG. 1(a) is a schematic diagram showing an initial state of an exhaust gas purification catalyst according to the invention, FIG 1(b) is a schematic diagram showing a state of the exhaust gas purification catalyst according to the invention during sulfur poisoning regeneration, FIG. 1(c) is a schematic diagram showing an initial state of an exhaust gas purification catalyst of the related art, and FIG 1(d) is a schematic diagram showing a state of the exhaust gas purification catalyst of the related art during sulfur poisoning regeneration;
FIG. 2 is a graph showing the PM 50% oxidation temperatures of exhaust gas purification catalysts in the initial state obtained in Examples 1 and 2 and Comparative Examples 1 to 7; and
FIG. 3 is a graph showing the PM 50% oxidation temperatures of exhaust gas purification catalysts after a sulfur poisoning regeneration treatment obtained in Examples 1 and 2 and Comparative Examples 1 to 3, 6, and 7.

### DETAILED DESCRIPTION OF EMBODIMENTS

Hereinafter, the invention will be described in detail using preferred embodiments thereof.

First, an exhaust gas purification catalyst according to an embodiment of the invention will be described. The exhaust gas purification catalyst according to the embodiment of the invention includes: a support containing alumina as a major component; and an active species fine particle containing silver sulfate as a major component, in which the active species fine particle is supported on a surface of the support. By causing the active species fine particle containing silver sulfate as a major component to be supported on the surface of the support containing alumina as a major component, the exhaust gas purification catalyst according to the embodiment of the invention can exhibit sufficiently high PM oxidation activity even when being exposed to gas containing sulfur. Accordingly, the exhaust gas purification catalyst according to the embodiment of the invention can be suitably adopted as a PM oxidation catalyst which oxidizes and removes particulate matter (PM) in exhaust gas, which is exhausted from an internal combustion engine such as a diesel engine, to purify the exhaust gas. More preferably, the exhaust gas purification catalyst according to the embodiment of the invention can be adopted as a diesel PM oxidation catalyst.

### (Support)

It is necessary that the support according to the embodiment of the invention is a support containing alumina (Al₂O₃) as a major component. This support containing alumina as a major component is not particularly limited as long it contains alumina as a major component. Here, "containing alumina as a major component" represents the support consisting of only alumina or the support consisting of alumina, which is a major component, and other components. As the other components, compounds other than alumina which can be used as a support of an exhaust gas purification catalyst for the above-described application can be used. In the latter case, the content of the alumina in the support is preferably 90 mass% or more, more preferably 95 mass% or more, and still more preferably 98 mass% or more with respect to 100 mass% of the total mass of the support. When the content of alumina in the support is less than the lower limit, silver sulfate reacts with the support, and thus the activity decreases.

Alumina as the support may be at least one alumina selected from the group consisting of boehmite alumina, pseudo-boehmite alumina, χ-alumina, κ-alumina, ρ-alumina, η-alumina, γ-alumina, pseudo-γ-alumina, δ-alumina, θ-alumina, and α-alumina. From the viewpoint of heat resistance, α-alumina or γ-alumina is preferably used, and γ-alumina having high activity is more preferably used.

In addition, as other components contained in the support other than alumina, from the viewpoints of the heat stability and the catalytic activity of the support, for example, oxides of metals can be used, the metals including: rare earth metals such as yttrium (Y), lanthanum (La), praseodymium (Pr), cerium (Ce), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), magnesium (Mg), calcium (Ca), strontium (Sr), barium (Ba), scandium (Sc), and vanadium (V); alkali metals; alkali earth metals; and transition metals.

In addition, from the viewpoint of heat resistance, it is more preferable that the support containing alumina as a major component is a support containing 90 mass% or more of alumina with respect to 100 mass% of the total mass of the support and an oxide of at least one metal selected from the group consisting of yttrium (Y), lanthanum (La), praseodymium (Pr), cerium (Ce), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), magnesium (Mg), calcium (Ca), strontium (Sr), barium (Ba), scandium (Sc), and vanadium (V).

Further, the specific surface area of the support containing alumina as a major component is not particularly limited, but is preferably 5 m²/g to 300 m²/g and more preferably 8 m²/g to 200 m²/g. When the specific surface area is more than the upper limit, the heat resistance of the support decreases, and thus the heat resistance of the catalyst tend to decrease. On the other hand, when the specific surface area is less than the lower limit, the dispersibility of the active species fine particle (silver sulfate) decreases. The specific surface area can be calculated from an adsorption isotherm as a BET specific surface area using a BET isotherm adsorption equation.

In addition, the shape of the support containing alumina as a major component is not particularly limited and may be a well-known shape of the related art such as a ring shape, a spherical shape, a cylindrical shape, or a pellet shape. It is preferable that the active species fine particle is particulate from the viewpoint of adopting the form having high dispersibility. When the support is particulate, the average primary particle size of particles of the support is preferably 1 nm to 300 nm and more preferably 3 nm to 200 nm. The average primary particle size of the support can be measured by being calculated using Scherrer's equation after obtaining the line width of a powder X-ray diffraction peak using an X-ray diffractometer. When the support is particulate, the average secondary particle size of particles of the support is preferably 0.05 µm to 100 µm and more preferably 0.1 µm to 10 µm. When the average secondary particle size is less than the lower limit, the particles are likely to aggregate in a high-temperature atmosphere, and thus the catalytic activity decreases. On the other hand, when the average secondary particle size is more than the upper limit, the contact with PM is lost. Therefore, the activity decreases, and it is difficult to support the particles on the filter. The average secondary particle size of the support can be measured using a laser diffraction particle size distribution analyzer. In addition, by changing the average particle size of the exhaust gas purification catalyst using an ordinary method after the production thereof, the average particle size of powder of the support containing alumina as a major component in the catalyst may be changed.

Further, a method of producing the support is not particularly limited, but a well-known method capable of producing the support containing alumina as a major component can be appropriately used. In addition, as the support, for example, a commercially available alumina or a composite oxide containing alumina as a major component may be used. The size of the support may be appropriately adjusted by milling with a ball mill or the like.

### (Active Species Fine Particle)

The active species fine particle according to the embodiment of the invention is supported on the surface of the support containing alumina as a major component. It is necessary that this active species fine particle contains silver sulfate (Ag₂SO₄) as a major component and has an average crystallite size of 3 nm to less than 100 nm. The active species fine particle is not particularly limited as long as it contains silver sulfate (Ag₂SO₄) as a major component and has an average crystallite size of 3 nm to less than 100 nm. Here, "containing silver sulfate as a major component" represents the active species fine particle consisting of only silver sulfate (Ag₂SO₄) or the active species fine particle consisting of silver sulfate (Ag₂SO₄), which is a major component, and other components. As the other components, for example, compounds other than alumina which can be used as a supported material of an exhaust gas purification catalyst for the above-described application can be used. In the latter case, the content of silver sulfate (Ag₂SO₄) in the active species fine particle is preferably 80 mass% or more, more preferably 90 mass% or more, and still more preferably 95 mass% or more with respect to 100 mass% of the total mass of the active species fine particle. When the content of silver sulfate (Ag₂SO₄) in the active species fine particle is less than the lower limit, the resistance to sulfur poisoning decreases.

In addition, from the viewpoint of obtaining components by the decomposition of a part of silver sulfate, examples of other components other than silver sulfate, which are contained in the active species fine particle containing silver sulfate (Ag₂SO₄) as a major component include metal silver (Ag), silver oxide, silver carbonate, silver sulfite, silver thiosulfate, and silver halide.

In the embodiment of the invention, the active species fine particle containing silver sulfate as a major component is used. As a result, the dispersibility of silver sulfate on the surface of the alumina support is high, the contact probability between silver sulfate (Ag₂SO₄) as the active species and particulate matter (PM) is improved, and thus sufficiently high PM oxidation activity can be exhibited. In addition, silver sulfate (Ag₂SO₄) as the active species has high dispersibility on the surface of the alumina support, is stable even at a high temperature, and thus is not likely to be decomposed and is less likely to be affected by sulfur poisoning. As a result, even when the catalyst is exposed to gas containing sulfur, high PM oxidation activity can be maintained, and sufficiently high PM oxidation activity can be exhibited.

The type of the support and silver sulfate and the like of the active species fine particle supported on the support can be verified by obtaining an X-ray diffraction pattern through X-ray diffraction measurement and then obtaining the types of existing crystals from the peak positions.

It is necessary that the average crystallite size (average primary particle size) of silver sulfate or the active species fine particle containing silver sulfate as a major component be 3 nm to less than 100 nm. When the average crystallite size of silver sulfate or the active species fine particle containing silver sulfate as a major component is less than the lower limit, the stability of silver sulfate is insufficient. On the other hand, when the average crystallite size is 100 nm or more, the dispersibility decreases, and the contact with PM is insufficient. From the viewpoint of the contact probability with PM, the average crystallite size of the active species fine particle is preferably 5 nm to 80 nm and more preferably 10 nm to 50 nm. The average crystallite size (average primary particle size) of silver sulfate or the active species fine particle containing silver sulfate as a major component can be measured by being calculated using Scherrer's equation after obtaining the line width of a powder X-ray diffraction peak using an X-ray diffractometer.

In addition, the support amount of silver sulfate used in the embodiment of the invention is not particularly limited, but is preferably 2 mass% to 50 mass%, more preferably 5 mass% to 30 mass%, and still more preferably 7.5 mass% to 15 mass% in terms of silver (metal) with respect to the total amount of the support and the active species fine particle. When the support amount of silver sulfate is less than the lower limit, the particulate matter oxidation performance is not sufficiently high. On the other hand, when the support amount of silver sulfate is more than the upper limit, the oxidation performance is saturated, and thus the cost increases.

The average secondary particle size of silver sulfate or the active species fine particle containing silver sulfate as a major component is not particularly limited, but is preferably 3 nm to 300 nm, more preferably 5 nm to 100 nm, and still more preferably 10 nm to 50 nm. When the average secondary particle size of silver sulfate or the active species fine particle containing silver sulfate as a major component is less than the lower limit, the stability of silver sulfate decreases. On the other hand, when the average secondary particle size is more than the upper limit, the contact probability with PM decreases. The average secondary particle size of silver sulfate or the active species fine particle containing silver sulfate as a major component can be measured using a laser diffraction particle size distribution analyzer.

In addition, a method of causing the active species fine particle to be supported on the support containing alumina as a major component is not particularly limited, and a well-known method can be appropriately used. For example, the active species fine particle is caused to be supported on the support by appropriately adopting methods including: a method of coating (optionally, followed by firing) the surface of the support with a dispersion or sol of the active species fine particle containing silver sulfate (Ag₂SO₄) as a major component or of a precursor thereof; and a vapor deposition method (for example, a chemical vapor deposition method, a physical vapor deposition method, or a sputter deposition method).

### (Exhaust Gas Purification Catalyst)

The exhaust gas purification catalyst according to the embodiment of the invention only needs to include: a support containing alumina as a major component; and an active species fine particle containing silver sulfate as a major component, in which the active species fine particle is supported on a surface of the support. The form of the exhaust gas purification catalyst is not particularly limited, and may be a pellet form or a form of being supported on a filter.

### (Method of Producing Exhaust Gas Purification Catalyst)

A method of producing the exhaust gas purification catalyst according to the embodiment of the invention is not particularly limited, and a well-known method can be appropriately used. For example, the exhaust gas purification catalyst is produced using a method including: a step of impregnating the surface of the support containing alumina as a major component with an aqueous solution containing ions of the active species fine particle containing silver sulfate as a major component and the like; and a step of heating and firing the support. Specifically, a method can be adopted, the method including: bringing the support containing alumina as a major component into contact with a solution containing silver sulfate (Ag₂SO₄) in a predetermined concentration to impregnate (support) the support with the solution containing a predetermined amount of silver sulfate (Ag₂SO₄); and heating and firing the support.

The heating and firing (firing step) in the supporting method of the active species fine particle containing silver sulfate as a major component may be performed in air. In addition, the firing temperature in the firing step is preferably 200°C to 700°C. When the firing temperature is lower than the lower limit, it is difficult to cause the active species fine particle containing silver sulfate as a major component to be supported on the support, and sufficient PM oxidation activity of the exhaust gas purification catalyst cannot be obtained. On the other hand, when the firing temperature is higher than the upper limit, the specific surface area of the support containing alumina as a major component is likely to decrease, and thus the oxidation activity decreases. In addition, the firing time is preferably 0.1 hours to 100 hours. When the firing time is shorter than the lower limit, it is difficult to support the active species fine particle containing silver sulfate as a major component, and the oxidation activity of the obtained exhaust gas purification catalyst (PM oxidation catalyst) decreases. On the other hand, when the firing time is longer than the upper limit, the effect is saturated, and the cost for preparing the catalyst increases.

### (Exhaust Gas Control Apparatus)

The exhaust gas purification catalyst according to the embodiment of the invention exhibits high PM oxidation activity against particulate matter, which is contained in gas (exhaust gas) exhausted from an internal combustion engine, and can oxidize and remove PM. Therefore, an exhaust gas control apparatus can be configured by disposing the exhaust gas purification catalyst so as to be in contact with the exhaust gas.

The exhaust gas control apparatus oxidizes and purifies particulate matter (PM) contained in exhaust gas, and the configuration thereof is not particularly limited as long as it includes the exhaust gas purification catalyst according to the invention. In order to oxidize and purify (remove) particulate matter contained in gas (exhaust gas) exhausted from an internal combustion engine, the exhaust gas control apparatus only needs to be disposed so as to be in contact with the exhaust gas. For example, the exhaust gas control apparatus may have a configuration of being disposed at a gas flow path inside an exhaust gas pipe through which exhaust gas exhausted from an internal combustion engine flows. The internal combustion engine is not particularly limited, and a well-known internal combustion engine such as an automobile engine (for example, a gasoline engine or a diesel engine) may be used.

### [Exhaust Gas Purification Filter]

Next, an exhaust gas purification filter according to an embodiment of the invention will be described. In the exhaust gas purification filter according to the embodiment of the invention, the exhaust gas purification catalyst according to the invention is supported on an air-permeable substrate (filter).

The exhaust gas purification filter according to the embodiment of the invention is not particularly limited as long as the exhaust gas purification catalyst according to the invention is supported on the air-permeable substrate. As the air-permeable substrate of the exhaust gas purification filter, a well-known air-permeable substrate (filter) can be appropriately used, and examples thereof include a particulate filter, a monolithic filter, a honeycomb filter, a pellet filter, a plate filter, and a ceramic foam filter. When the exhaust gas purification catalyst according to the embodiment of the invention is supported on an air-permeable substrate (filter), it is more preferable that the exhaust gas purification catalyst according to the embodiment of the invention is supported on a particulate filter because higher particulate matter (PM) oxidation performance than before can be obtained.

In addition, the material of the air-permeable substrate of the exhaust gas purification filter is not particularly limited, and a well-known material can be appropriately used. Examples of the well-known material include ceramics such as cordierite, silicon carbide, mullite, and aluminum titanate; and metals such as stainless steel containing chromium and aluminum.

Further, it is preferable that the exhaust gas purification filter has pores having an average pore size of 1 µm to 300 µm. By using the substrate having the above-described average pore size, particulate matter can be oxidized and purified more efficiently.

In addition, in the exhaust gas purification filter, it is preferable that a coating layer formed of the exhaust gas purification catalyst according to the embodiment of the invention is formed. The thickness of the coating layer is preferably 0.025 µm to 25 µm and more preferably 0.035 µm to 10 µm. When the thickness of the coating layer is less than the lower limit, the surface of the filter cannot be sufficiently coated with the catalyst including: a support containing alumina as a major component; and an active species fine particle containing silver sulfate as a major component, in which the active species fine particle is supported on a surface of the support. Therefore, the number of contact points with particulate matter decreases, and it is difficult to impart sufficiently high oxidation performance. When the thickness of the coating layer is more than the upper limit, the pores of the filter are blocked by the catalyst including: a support containing alumina as a major component; and an active species fine particle containing silver sulfate as a major component, in which the active species fine particle is supported on a surface of the support. Therefore, the pressure loss of exhaust gas increases, and the engine efficiency decreases.

Further, in the exhaust gas purification filter, the amount of the catalyst supported on the air-permeable substrate is not particularly limited, and can be appropriately adjusted depending on an internal combustion engine and the like. The amount of the catalyst is preferably 1 g to 300 g and more preferably 10 g to 100 g with respect to 1 L of the volume of the air-permeable substrate. When the support amount is less than the lower limit, it is difficult to exhibit sufficiently high catalytic performance. On the other hand, when the support amount is more than the upper limit, the pores of the air-permeable substrate are blocked by the catalyst including the support and the silver-containing material, the pressure loss of exhaust gas increases, and the engine efficiency decreases.

The exhaust gas purification filter has a porosity of preferably 30% to 70% (more preferably 40% to 65%). "Porosity" described herein refers to a volume ratio of void portions in the air-permeable substrate. When the porosity is lower than the lower limit, the pores are likely to be blocked by particulate matter in exhaust gas. On the other hand, when the porosity is higher than the upper limit, it is difficult to collect particulate matter in exhaust gas, and the strength of the filter decreases.

Further, in the exhaust gas purification filter, a method of causing the exhaust gas purification catalyst according to the invention to be supported on the air-permeable substrate is not particularly limited, and various methods can be adopted. For example, a method can be adopted, the method including: preparing a catalyst; and causing the catalyst to be supported on an air-permeable substrate. In this method, the catalyst includes: a support containing alumina as a major component; and an active species fine particle containing silver sulfate as a major component, in which the active species fine particle is supported on a surface of the support. Alternatively, a method can be adopted, in which a catalyst is caused to be supported on a filter through the following steps including: a step of causing a support to be supported on an air-permeable substrate; and a step of causing the active species fine particle containing silver sulfate as a major component to be supported on the support which is supported on the air-permeable substrate. In this method, the catalyst includes: a support containing alumina as a major component; and an active species fine particle containing silver sulfate as a major component which is supported on the surface of the support. In addition, a method of causing the catalyst or the support and the active species fine particle to be supported on the air-permeable substrate is not particularly limited, and a well-known method can be appropriately adopted. For example, a method can be appropriately used, the method including: preparing a slurry of the catalyst or the support and the like; and coating (optionally, followed by firing) the air-permeable substrate with this slurry. In the exhaust gas purification catalyst, other well-known components which can be used in a catalyst to oxidize particulate matter may be appropriately used within a range in which the effects of the invention are not impaired.

### [Exhaust Gas Purification Method]

Next, an exhaust gas purification method according to an embodiment of the invention will be described. The exhaust gas purification method according to the embodiment of the invention includes: oxidizing and removing particulate matter (PM) by bringing exhaust gas exhausted from an internal combustion engine into contact with the exhaust gas purification catalyst according to the embodiment of the invention.

In the exhaust gas purification method according to the embodiment of the invention, a method of bringing exhaust gas into contact with the exhaust gas purification catalyst is not particularly limited, and a well-known method can be appropriately used. For example, a method may be adopted, the method including: bringing exhaust gas exhausted from an internal combustion engine into contact with the exhaust gas purification catalyst according to the embodiment of the invention by disposing the exhaust gas purification catalyst inside an exhaust gas pipe through which gas exhausted from an internal combustion engine flows.

In the exhaust gas purification catalyst according to the embodiment of the invention used in the exhaust gas purification method according to the embodiment of the invention, even when being exposed to gas containing sulfur, high PM oxidation activity can be maintained. Therefore, even when the exhaust gas purification catalyst is exposed to gas containing sulfur, sufficiently high PM oxidation activity can be exhibited. By bringing exhaust gas exhausted from an internal combustion engine such as a diesel engine into contact with the exhaust gas purification catalyst according to the invention, particulate matter (PM) in the exhaust gas can be sufficiently oxidized and removed to purify the exhaust gas. Further, even when the exhaust gas purification catalyst is exposed to gas containing sulfur, particulate matter (PM) in the exhaust gas can be sufficiently oxidized and removed to purify the exhaust gas. From these points of view, the exhaust gas purification method according to the invention can be suitably adopted, for example, as a method of purifying particulate matter (PM) in exhaust gas exhausted from an internal combustion engine such as a diesel engine.

### [Examples]

Hereinafter, the invention will be described in more detail using Examples and Comparative Examples but is not limited to the following Examples. Physical properties of a composite oxide and a mixed oxide were measured using methods described below.

### (Example 1)

1.44 g of silver sulfate (manufactured by Wako Pure Chemical Industries Ltd.) was dissolved in ion exchange water (250 g) at 80°C to prepare a silver sulfate aqueous solution. Next, 8.56 g of γ-Al₂O₃ powder (manufactured by Nikki-Universal Co., Ltd., TN4, specific surface area: 150 m²/g) as a support was impregnated with the obtained silver sulfate aqueous solution and was evaporated to dryness. The obtained material was dried at 110°C overnight and was fired at 500°C for three hours to cause silver sulfate to be supported on the γ-Al₂O₃ support. As a result, a catalyst powder was obtained. Next, this powder was mixed in a mortar and was molded into a pellet shape having a particle size of 0.3 mm to 0.5 mm using an ordinary method (cold isostatic pressing (CIP)). As a result, a pellet catalyst (Ag₂SO₄/γ-Al₂O₃) was obtained. The support amount of silver sulfate was 10.0 mass% in terms of Ag with respect to the total amount of the γ-Al₂O₃ support and the active species fine particle formed of silver sulfate.

### (Example 2)

A pellet catalyst (Ag₂SO₄/α-Al₂O₃) was obtained in the same procedure as that of Example 1, except that α-Al₂O₃ powder (8.56 g, manufactured by Wako Pure Chemical Industries Ltd., α-Al₂O₃, specific surface area: 8 m²/g) was used instead of γ-Al₂O₃ as the support. The support amount of silver sulfate was 10.0 mass% in terms of Ag with respect to the total amount of the α-Al₂O₃ support and the active species fine particle formed of silver sulfate.

### (Comparative Example 1)

1.57 g of silver nitrate (manufactured by Wako Pure Chemical Industries Ltd.) was dissolved in ion exchange water (250 g) at 20°C (room temperature) to prepare a silver nitrate aqueous solution. Next, 9.00 g of γ-Al₂O₃ powder (manufactured by Nikki-Universal Co., Ltd., TN4, specific surface area: 150 m²/g) was impregnated with the obtained silver nitrate aqueous solution and was evaporated to dryness. The obtained material was dried at 110°C overnight and was fired at 500°C for three hours to cause silver (Ag) to be supported on the γ-Al₂O₃ support. As a result, a catalyst powder for comparison was obtained Next, this powder was mixed in a mortar and was molded into a pellet shape having a particle size of 0.3 mm to 0.5 mm using an ordinary method (cold isostatic pressing (CIP)). As a result, a pellet catalyst (Ag/γ-Al₂O₃) for comparison was obtained. The support amount of silver was 10 mass% in terms of Ag with respect to the total amount of the γ-Al₂O₃ support and silver.

### (Comparative Example 2)

A pellet catalyst (Ag/CeO₂) for comparison was obtained in the same procedure as that of Comparative Example 1, except that CeO₂ powder (9.00 g, manufactured by Anan Kasei Co. Ltd., low-temperature firing cerium, specific surface area: 150 m²/g) was used instead of γ-Al₂O₃ as the support. The support amount of silver was 10 mass% in terms of Ag with respect to the total amount of the CeO₂ support and silver.

### (Comparative Example 3)

A pellet catalyst (Ag₂SO₄/CeO₂) for comparison was obtained in the same procedure as that of Example 1, except that CeO₂ powder (8.56 g, manufactured by Anan Kasei Co. Ltd., low-temperature firing cerium, specific surface area: 150 m²/g) was used instead of γ-Al₂O₃ as the support. The support amount of silver sulfate was 10 mass% in terms of Ag with respect to the total amount of the CeO2 support and silver sulfate.

### (Comparative Example 4)

A pellet catalyst (Ag₂SO₄/TiO₂) for comparison was obtained in the same procedure as that of Example 1, except that TiO₂ powder (8.56 g, ST-01, manufactured by Ishihara Sangyo Co. Ltd., specific surface area: 300 m²/g) was used instead of γ-Al₂O₃ as the support. The support amount of silver sulfate was 10 mass% in terms of Ag with respect to the total amount of the TiO₂ support and silver sulfate.

### (Comparative Example 5)

A pellet catalyst (Ag₂SO₄/SiO₂) for comparison was obtained in the same procedure as that of Example 1, except that SiO₂ powder (8.56 g, 90G, manufactured by Nippon Aerosil Co. Ltd., specific surface area: 90 m²/g) was used instead of γ-Al₂O₃ as the support. The support amount of silver sulfate was 10 mass% in terms of Ag with respect to the total amount of the SiO₂ support and silver sulfate.

### (Comparative Example 6)

Next, 10.00 g of γ-Al₂O₃ powder (manufactured by Nikki-Universal Co., Ltd., TN4, specific surface area: 150 m²/g) as a support was impregnated with a predetermined amount of dinitroammine platinum aqueous solution (containing 4.5 mass% of Pt) and was evaporated to dryness. The obtained material was dried at 110°C overnight and was fired at 500°C for three hours to cause platinum (Pt) to be supported on the γ-Al₂O₃ support. As a result, a catalyst powder for comparison was obtained. Next, this powder was mixed in a mortar and was molded into a pellet shape having a particle size of 0.3 mm to 0.5 mm using an ordinary method (cold isostatic pressing (CIP)). As a result, a pellet catalyst (Pt/γ-Al₂O₃) for comparison was obtained. The support amount of platinum (Pt) was 1.0 mass% in terms of Pt with respect to the total amount of the γ-Al₂O₃ support and Pt.

### (Comparative Example 7)

A pellet catalyst (Ag₂SO₄/CaSO₄) for comparison was obtained in the same procedure as that of Example 1, except that calcium sulfate powder (8.56 g, calcined plaster (manufactured by Wako Pure Chemical Industries Ltd.) which was fired in air at 500°C for three hours, specific surface area: 5 m²/g) was used instead of γ-Al₂O₃ as the support. The support amount of silver sulfate was 10 mass% in terms of Ag with respect to the total amount of the CaSO₄ support and silver sulfate.

Table 1 shows the supports and the supported materials (active species fine particles) used in Examples 1 and 2 and Comparative Examples 1 to 7.

**[Table 1]**

| | Support | Supported Material (Active Species Fine Particle) |
|---|---|---|
| Example 1 | γ-Al₂O₃ | Ag₂SO₄ |
| Example 2 | α-Al₂O₃ | Ag₂SO₄ |
| Comparative Example 1 | γ-Al₂O₃ | Ag |
| Comparative Example 2 | CeO₂ | Ag |
| Comparative Example 3 | CeO₂ | Ag₂SO₄ |
| Comparative Example 4 | TiO₂ | Ag₂SO₄ |
| Comparative Example 5 | SiO₂ | Ag₂SO₄ |
| Comparative Example 6 | γ-Al₂O₃ | Pt |
| Comparative Example 7 | CaSO₄ | Ag₂SO₄ |

### [Evaluation of Properties of Catalysts Obtained in Examples 1 and 2 and Comparative Examples 1 to 7]

### <PM Oxidation Activity Evaluation Test>

Using each of the catalysts in the initial state obtained in Examples 1 and 2 and Comparative Examples 1 to 7, the PM oxidation activity was measured as follows.

### (PM Mixing Treatment I)

That is, in a PM oxidation activity measurement test, first, using a rotary stand for testing and research, the pellet catalyst in the initial state and carbon powder (manufactured by Tokai Carbon Co., Ltd., trade name: "Seast 9 (SAF)", average particle size: 19 nm) as simulated particulate (simulated PM) were filled into a cylindrical sample pipe having an inner diameter of 20 mm. The pellet catalyst and the carbon powder were mixed by being rotated in the rotary stand for testing and research for one hour to prepare an evaluation sample. In the PM mixing treatment, the simulated PM was mixed with the catalyst at a weight ratio (catalyst:simulated PM) of 49:1. "Initial state" described here refers to the state of the catalyst on which both a heat resistance test and a sulfur poisoning regeneration test described below are not performed after the production of the catalyst.

### (Measurement of PM Oxidation Activity of Catalyst in Initial State: PM purification Treatment I)

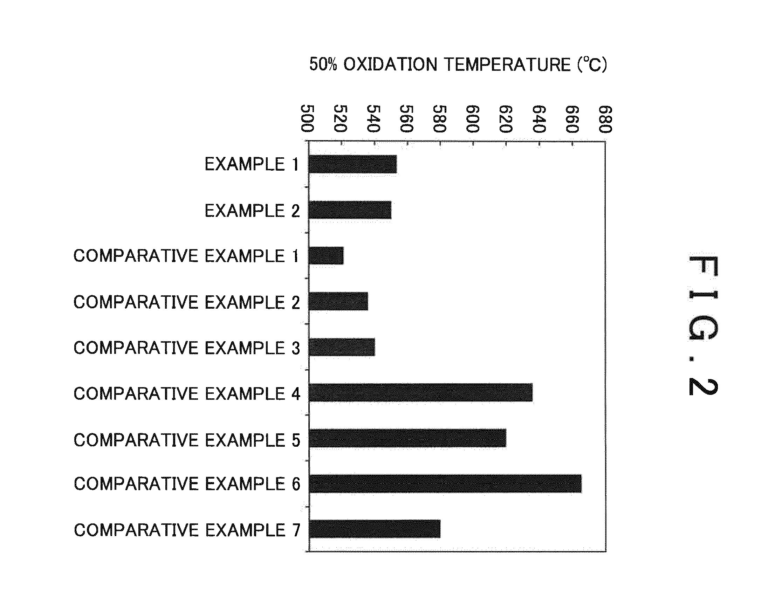

Next, using a fixed bed flow reactor, 1.0 g of the obtained evaluation sample was filled into a quartz reaction tube having an inner diameter of 15 mm. Then, a mixed gas (intake gas) containing O₂ (10%)+H₂O (10%)/N₂ (remainder) with respect to the evaluation sample was supplied to the catalyst at a gas flow rate of 10 L/min while increasing the intake gas temperature from 120°C to 720°C at a temperature increase rate of 20°C/min. The concentration of CO₂ in gas exhausted from the device was measured during a period from the supply start to the supply end of the mixed gas. Based on the concentration of CO2 in the exhaust gas and the temperature of the intake gas, the temperature of the mixed gas (PM 50% oxidation temperature) required to oxidize 50% of carbon attached to each evaluation sample was calculated as an index of the PM oxidation activity. It can be said that the lower the PM 50% oxidation temperature, the higher the PM oxidation activity. FIG. 2 is a graph showing, as the PM oxidation activity of the catalyst in the initial state, the PM 50% oxidation temperatures of exhaust gas purification catalysts in the initial state obtained in Examples 1 and 2 and Comparative Examples 1 to 7.

### (Sulfur Poisoning Treatment)

Next, using a fixed bed flow reactor, 1.1 g of the obtained pellet catalyst sample in the initial state was disposed in a quartz reaction tube having an inner diameter of 15 mm. Further, in order to sufficiently oxidize SO₂ supplied, sufficiently S-poisoned Pt/Al₂O₃ (0.5 g) was disposed in the previous stage of the catalyst sample. Next, a mixed gas containing O₂ (10%)+CO₂ (10%)+H₂O (10%)/N₂ (remainder) was caused to flow through the inside of the device and was heated to 400°C. Next, a mixed gas (intake gas) containing SO₂ (66 ppm), O₂ (10%), CO₂ (10%), H₂O (10%), and N₂ (remainder) was supplied to the device under conditions of 400°C (intake gas temperature), 55.5 minutes, and a gas flow rate of 7 L/min (sulfur poisoning treatment). The total supply amount of the sulfur component supplied in the sulfur poisoning treatment was 1.0 g/30g-cat.

### (PM Mixing Treatment II)

Next, the catalyst sample after the sulfur poisoning treatment and the carbon powder (simulated PM) were mixed in the same procedure as that of the PM mixing treatment I to prepare an evaluation sample. In the PM mixing treatment, the simulated PM was mixed with the catalyst at a weight ratio (catalyst: simulated PM) of 49:1.

### (Sulfur Poisoning Regeneration Treatment)

Next, after the sulfur poisoning treatment-PM mixing treatment II, the sulfur poisoning regeneration treatment was performed as follows. A mixed gas (intake gas) containing O₂ (10%)+H₂O (10%)/N₂ (remainder) with respect to the evaluation sample was supplied to the catalyst sample at a gas flow rate of 10 L/min while increasing the intake gas temperature from 120°C to 720°C at a temperature increase rate of 20°C/min.

### (PM Mixing Treatment III)

Next, the catalyst sample after the sulfur poisoning regeneration treatment and the carbon powder (simulated PM) were mixed in the same procedure as that of the PM mixing treatment I to prepare an evaluation sample. In the PM mixing treatment, the simulated PM was mixed with the catalyst at a weight ratio (catalyst:simulated PM) of 49:1.

### (Measurement of PM Oxidation Activity of Catalyst after Sulfur Poisoning Regeneration Treatment: PM purification Treatment II)

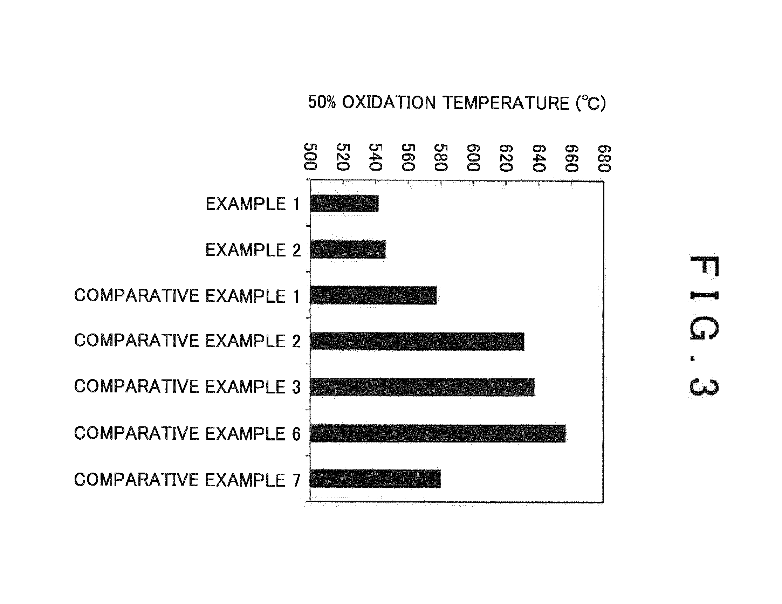

Next, after the PM mixing treatment III, a mixed gas (intake gas) including O₂ (10%)+H₂O (10%)/N₂ (remainder) with respect to the evaluation sample was supplied to the catalyst at a gas flow rate of 10 L/min while increasing the intake gas temperature from 120°C to 720°C at a temperature increase rate of 20°C/min. The concentration of CO₂ in gas exhausted from the device was measured during a period from the supply start to the supply end of the mixed gas. Based on the concentration of CO₂ in the exhaust gas and the temperature of the intake gas, the temperature of the mixed gas (PM 50% oxidation temperature) required to oxidize 50% of carbon attached to each evaluation sample was calculated as an index of the PM oxidation activity of the catalyst after the sulfur poisoning regeneration treatment. It can be said that the lower the PM 50% oxidation temperature, the higher the PM oxidation activity of the catalyst after sulfur poisoning regeneration treatment. FIG. 3 is a graph showing, as the PM oxidation activity of the catalyst after the sulfur poisoning regeneration treatment, the PM 50% oxidation temperatures of exhaust gas purification catalysts after sulfur poisoning regeneration treatment obtained in Examples 1 and 2 and Comparative Examples 1 to 3, 6, and 7.

### <X-ray Diffraction (XRD) Measurement>

Regarding each of the catalysts obtained in Examples 1 and 2 and Comparative Example 1, the average crystallite size (average primary particle size) of the supported material of the catalyst was measured as follows. First, by using each of the catalysts obtained in Examples 1 and 2 and Comparative Example 1 as a measurement sample and a powder X-ray diffractometer (manufactured by Rigaku Corporation, trade name: "horizontal sample mount X-ray diffractometer RINT-TTR", an X-ray diffraction (XRD) pattern of a composite metal oxide was measured under conditions of a scan step of 0.02°, a divergence-scattering slit of 1/2 deg., a light-receiving slit of 0.15 mm, a CuKα ray (λ=0.15418 nm), 50 kV, 300 mA, and a scan speed of 0.5 sec/point. Regarding the catalyst supported material of the obtained XRD pattern, using Scherrer's equation: D=0.9λ/βcosθ (wherein D represents the crystallite size; λ represents the wavelength of the X-ray used; β represents the diffraction line width of the XRD measurement sample; and θ represents the diffraction angle), the average crystallite size (average primary particle size) of Ag₂SO₄ crystals was calculated based on the diffraction line width of the peak (2θ=31.1°) derived from (311) plane, and the average crystallite size (average primary particle size) of Ag crystals was calculated based on the diffraction line width of the peak (2θ=38.1°) derived from (111) plane. The obtained results are shown in Table 2.

**[Table 2]**

| | Average Crystallite Particle Size (nm) | |
|---|---|---|
| | Ag (2θ=38.1°) | Ag₂SO₄(2θ=31.1°) |
| Example 1 | - | 43.9 |
| Example 2 | - | 38.8 |
| Comparative Example 1 | >100 | - |

As clearly seen from the average crystallite sizes of Ag and Ag₂SO₄ in the exhaust gas purification catalysts in the initial state of Examples 1 and 2 and Comparative Example 1 shown in Table 2, the following results were found. The average crystallite size of Ag₂SO₄ supported on the exhaust gas purification catalysts of Examples 1 and 2 was fine at 50 nm or less. On the other hand, the average crystallite size of Ag supported on the catalyst for comparison of Comparative Examples 1 was coarse at 100 nm or more.

### <Evaluation Results>

As clearly seen from the results shown in FIGS. 2 and 3, when the exhaust gas purification catalysts of Examples 1 and 2 were compared to the catalysts for comparison of Comparative Examples 4 and 5, it was found that the PM oxidation activity of the catalyst in the initial state was superior. In addition, when the exhaust gas purification catalysts of Examples 1 and 2 were compared to the catalysts for comparison of Comparative Examples 6 and 7, it was found that the PM oxidation activity of the catalyst was superior not only in the initial state but also after sulfur poisoning. Further, when the exhaust gas purification catalysts of Examples 1 and 2 were compared to the catalysts for comparison of Comparative Examples 1 to 3, it was found that the PM oxidation activity of the catalyst after sulfur poisoning was superior; and that, even when the exhaust gas purification catalyst is exposed to gas containing sulfur, sufficiently high PM oxidation activity can be exhibited.

It was found from the above results that, by using the exhaust gas purification catalyst in which the active species fine particle containing silver sulfate as a major component is supported on the surface of the support containing alumina as a major component, sufficiently high PM oxidation activity can be can exhibited even when being exposed to gas containing sulfur.

As described above, according to the invention, an exhaust gas purification catalyst capable of exhibiting sufficiently high PM oxidation activity even when being exposed to gas containing sulfur; and an exhaust gas purification filter and an exhaust gas purification method using the same can be provided. Accordingly, the exhaust gas purification catalyst, and the exhaust gas purification filter and the exhaust gas purification method using the same according to the present invention are particularly useful, for example, as a PM oxidation catalyst for purifying particulate matter in exhaust gas exhausted from an internal combustion engine such as a diesel engine and as an exhaust gas purification filter or an exhaust gas purification method using the same.

## Claims

1. An exhaust gas purification catalyst **characterized by** comprising:
a support containing alumina as a major component; and
an active species fine particle containing silver sulfate as a major component and having an average crystallite size of 3 nm to less than 100 nm, wherein
the active species fine particle is supported on a surface of the support.

2. The exhaust gas purification catalyst according to claim 1, **characterized in that**
a support amount of the silver sulfate with respect to a total amount of the support and the active species fine particle is 2 mass% to 50 mass% in terms of metal silver.

3. The exhaust gas purification catalyst according to claim 1 or 2, **characterized in that**
a specific surface area of the support is 5 m²/g to 300 m²/g.

4. An exhaust gas purification filter **characterized by** comprising:
an air-permeable substrate; and
the exhaust gas purification catalyst according to any one of claims 1 to 3 supported on the air-permeable substrate.

5. An exhaust gas purification method **characterized by** comprising:
oxidizing and removing particulate matter (PM) by bringing exhaust gas exhausted from an internal combustion engine into contact with the exhaust gas purification catalyst according to any one of claims 1 to 3.
